# EUROPEAN PATENT APPLICATION

(11) **EP 4 632 566 A1**
(43) Date of publication of application: **15.10.2025**
(21) Application number: 23902195.9
(22) Date of filing: 07.09.2023
(51) Int. Cl.: G06F 9/455

(54) **VIRTUAL MACHINE MEMORY MANAGEMENT METHOD AND COMPUTING DEVICE**

(30) Priority: 13.12.2022 CN 202211607011
(71) Applicant: xFusion Digital Technologies Co., Ltd., Zhengzhou, Henan 450046 (CN)
(72) Inventor: ZHANG, Hailiang, Zhengzhou, Henan 450046 (CN)
(74) Representative: MERH-IP Matias Erny Reichl Hoffmann Patentanwälte PartG mbB
(86) International application number: PCT/CN2023/117577
(87) International publication number: WO 2024/124989

(57) **Abstract**

Embodiments of the present application disclose a virtual machine memory management method and a computing device, which relates to the field of data processing technologies. On-demand release of memory managed by a virtual machine in different page table scenarios is supported, so that overcomitment of the memory managed by the virtual machine is achieved. The method includes: obtaining first information about a memory page managed by a host machine corresponding to the virtual machine; obtaining second information about a memory page of the virtual machine; based on the first information and the second information, determining a target free memory page that meets a release condition from a free memory page of the virtual machine, where the release condition includes: a starting address of the target free memory page in the virtual machine being same as the starting address of the memory page managed by the host machine, and a total memory size of consecutive free memory pages starting from the starting address of the target free memory page being equal to the size of the memory page managed by the host machine; and releasing the target free memory page.

## Description

This application claims priority to the Chinese Patent Application No. 202211607011.7, filed with the China National Intellectual Property Administration on December 13, 2022 and entitled "VIRTUAL MACHINE MEMORY MANAGEMENT METHOD AND COMPUTING DEVICE", which is incorporated herein by reference in its entirety.

### TECHNICAL FIELD

The present application relates to the field of virtualization technologies, and in particular, to a virtual machine memory management method and a computing device.

### BACKGROUND

As server virtualization technologies become mature, a virtual machine monitor (virtual machine monitor, VMM) may be introduced between hardware and an operating system of a server, so that physical resources in the server may be abstracted, simulated, and combined into a plurality of virtual machines (virtual machine, VM) that may have different operating systems installed.

Currently, a virtual machine may apply for memory resources that need to be used when handling services. As the services handled by the virtual machine may be in peak and valley states, users may inaccurately estimate the memory resources, resulting in more memory resources being applied for than actually used. This leads to a phenomenon where the memory resources applied by the virtual machine are "occupied but not used". Therefore, a "memory ballooning" technology may be configured to enable the virtual machine to obtain free memory resources and release the free memory resources.

In the related art, to ensure that the virtual machine successfully releases the free memory resources after obtaining them, it is necessary to ensure that attributes of memory resources corresponding to operating systems installed on the virtual machine and a host machine are the same. This limits release of memory resources by the virtual machine.

### SUMMARY

Embodiments of the present application provide a virtual machine memory management method and a computing device, which may support on-demand release of memory managed by a virtual machine in different page table scenarios, thereby achieving overcommitment of the memory managed by the virtual machine.

In a first aspect, the embodiments of the present application provide a virtual machine memory management method. The method includes: obtaining first information about a memory page managed by a host machine corresponding to the virtual machine, where the first information includes a size and a starting address of the memory page managed by the host machine; obtaining second information about a memory page of the virtual machine, where the second information includes state information of the memory page of the virtual machine and a starting address of the memory page managed by the virtual machine; based on the first information and the second information, determining a target free memory page from a free memory page of the virtual machine, where the free memory page is a memory page whose state information is free, and the target free memory page of the virtual machine is a free memory page that meets a release condition, where the release condition includes: a starting address of the target free memory page in the virtual machine being same as the starting address of the memory page managed by the host machine, and a total memory size of consecutive free memory pages starting from the starting address of the target free memory page being equal to the size of the memory page managed by the host machine; and releasing the target free memory page.

It is understandable that the first information about the memory page managed by the host machine corresponding to the virtual machine is obtained, where the first information includes the size of the memory page managed by the host machine and the starting address of the memory page managed by the host machine, and the second information about the memory page of the virtual machine is obtained, where the second information includes the status information of the memory page of the virtual machine and the starting address of the memory page managed by the virtual machine. The obtained free memory page whose total memory size of the consecutive free memory pages is equal to the size of the memory page managed by the host machine is taken as the target free memory page, and the target free memory page is released. Since the size of the memory page managed by the host machine may be obtained, a plurality of consecutive memory pages managed by the virtual machine whose total memory size is equal to the size of the memory page managed by the host machine may be released to the host machine. This allows the host machine to manage memory release according to its own memory page size, solving a problem where the memory managed by the virtual machine fails to be released to the host machine due to an inconsistency between the size of the memory page managed by the virtual machine and the size of the memory page managed by the host machine, thereby achieving overcomitment of the memory managed by the virtual machine.

In a possible implementation, obtaining the first information about the memory page managed by the host machine corresponding to the virtual machine includes: obtaining the first information about the memory page managed by the host machine in configuration space of a virtual machine monitor VMM.

It is understandable that the first information about the memory page managed by the host machine may be obtained from the configuration space of the virtual machine monitor VMM, facilitating obtaining the first information by the virtual machine and determining the target free memory page based on the first information.

In a possible implementation, the method further includes: obtaining a memory release instruction of the virtual machine, where the memory release instruction is configured to indicate release of the memory page of the virtual machine; and in response to the memory release instruction, setting state of the memory page of the virtual machine corresponding to the memory release instruction to a free state.

It is understandable that for the memory page managed by the virtual machine, when each memory page needs to be released to the host machine, the virtual machine may send the memory release instruction for the memory page. After the memory release instruction is received, the information about the memory page of the virtual machine and the information about the memory page of the host machine corresponding to the virtual machine may be obtained. This ensures that when each memory page needs to be released, the state information of the memory page may be set to a free state. In this way, the memory page is determined as a free memory page, facilitating a subsequent judgment on whether the free memory page meets the release condition and achieving the release of the memory managed by the virtual machine.

In a possible implementation, based on the first information and the second information, determining the target free memory page from the free memory page of the virtual machine includes: in response to the memory release instruction, determining whether a size of a memory page with consecutive free bits in the virtual machine is equal to the size of the memory page managed by the host machine; when the size of the memory page with the consecutive free bits in the virtual machine is equal to the size of the memory page managed by the host machine, determining whether a starting address of a first free memory page in the memory page with the consecutive free bits in the virtual machine is the same as the starting address of the memory page managed by the host machine; and when the starting address of the first free memory page in the memory page with the consecutive free bits in the virtual machine is the same as the starting address of the memory page managed by the host machine, determining that the memory page with the consecutive free bits is the target free memory page that meets the release condition.

It is understandable that the memory page in the free state may be marked with the free bits. In response to the memory release instruction, whether the size of the memory page with the consecutive free bits is equal to the size of the memory page managed by the host machine may be determined. If the sizes are equal, whether the starting address of the first free memory page in the memory page with the consecutive free bits in the virtual machine is the same as the starting address of the memory page managed by the host machine may be determined. If the starting addresses are the same, the memory page with the consecutive free bits is the target free memory page that meets the release condition. This solves the problem where the memory managed by the virtual machine fails to be released to the host machine due to the inconsistency between the size of the memory page managed by the virtual machine and the size of the memory page managed by the host machine, thereby achieving the overcommitment of the memory managed by the virtual machine.

In a possible implementation, determining whether the size of the memory page with the consecutive free bits in the virtual machine is equal to the size of the memory page managed by the host machine includes: determining whether a quantity of memory pages with the consecutive free bits in the virtual machine is the same as a quantity of a first free memory page, where the quantity of the first free memory page is a ratio of the size of the memory page managed by the host machine to the size of the memory page managed by the virtual machine; and when the quantity of the memory pages with the consecutive free bits in the virtual machine is the same as the quantity of the first free memory page, determining that the size of the memory page with the consecutive free bits in the virtual machine is equal to the size of the memory page managed by the host machine.

It is understandable that the quantity of the first free memory page is determined based on the size of the memory page in the first information and the size of the memory page in the second information, and the quantity of memory pages with the consecutive free bits in the virtual machine is the same as the quantity of the first free memory page, ensuring that the size of the memory page with the consecutive free bits is equal to the size of the memory page managed by the host machine, thereby not affecting the process of releasing the memory managed by the virtual machine to the host machine due to the inconsistency between the size of the memory page managed by the virtual machine and the size of the memory page managed by the host machine.

In a possible implementation, the information about the memory page of the virtual machine includes each memory page managed by the virtual machine and corresponding marking information of each memory page. The corresponding marking information of the memory page is configured to indicate whether the memory page is free.

It is understandable that obtaining the information about the memory page of the virtual machine may also involve obtaining each memory page of the virtual machine and the corresponding marking information for each page. The marking information may indicate whether the corresponding memory page is free, facilitating the subsequent judgment on whether the free memory page meets the release condition and the release of the memory managed by the virtual machine.

In a possible implementation, when the marking information of the memory page managed by the virtual machine indicates that the memory page is free, a usage permission of the memory page managed by the virtual machine is modified to unavailable for the virtual machine.

It is understandable that when the memory page of the virtual machine is determined as the free memory page, a server may modify the usage permission of the free memory page to unavailable for the virtual machine. This achieves isolation of the virtual machine memory page and prevents a problem where the virtual machine invokes the free memory page when the free memory page does not meet the release condition, causing the free memory page to exit the free state, thereby allowing the virtual machine to accurately release the free memory to the host machine.

In a possible implementation, the state information of the memory page of the virtual machine is stored in a first data structure, where the first data structure comprises any one of a bitmap, a hash table, or a linked list.

It is understandable that the state information of the memory page in the second information of the virtual machine may be recorded in the virtual machine or the host machine in the form of the first data structure. Using any one data structure of the bitmap, the hash table, or the linked list to record the information about the memory page of the virtual machine may improve efficiency of determining the target free memory page that meets the release condition.

In a possible implementation, obtaining the target free memory page from the free memory page of the virtual machine that meets the release condition includes: obtaining the first quantity, where the first quantity is the ratio of the size of the memory page managed by the host machine to the size of the memory page managed by the virtual machine; and if the corresponding marking information of each of the first quantity of consecutive memory pages in the first data structure indicates that the memory page is the free memory page, the first quantity of consecutive memory pages are determined as the target free memory page.

It is understandable that if the information about the memory page of the virtual machine is recorded in the first data structure, the first quantity of the consecutive free memory pages required when the release condition is met may be determined based on the ratio of the size of the memory page managed by the host machine to the size of the memory page managed by the virtual machine. When the corresponding marking information of each of the first quantity of consecutive memory pages recorded in the first data structure indicates that the memory page is the free memory page, the first quantity of consecutive memory pages may be determined as the target free memory page, improving the efficiency of determining the target free memory page.

In a possible implementation, the first data structure is the bitmap; and based on the first information and the second information, determining the target free memory page from the free memory page of the virtual machine includes: if the quantity of the consecutive memory pages in the bitmap is the same as the quantity of the first free memory page, determining the consecutive free memory pages as the target free memory page, where the quantity of the first free memory page is the ratio of the size of the memory page managed by the host machine to the size of the memory page managed by the virtual machine.

It is understandable that by comparing the quantity of the consecutive memory pages in the bitmap with the quantity of the first free memory page, the consecutive memory pages are determined as the target free memory page, thereby avoiding a problem where the memory managed by the virtual machine fails to be released to the host machine due to an inconsistency between the size of the memory page managed by the virtual machine and the size of the memory page managed by the host machine when the first data structure is a bitmap.

In a possible implementation, after determining the target free memory page from the free memory page of the virtual machine based on the first information and the second information, the method further includes: sending information about the target free memory page to the virtual machine monitor VMM; invoking the virtual machine monitor VMM to determine whether the target free memory page meets the release condition; and releasing the target free memory page, including: if the target free memory page meets the release condition, releasing the target free memory page.

It is understandable that the virtual machine determines whether the target free memory pages meets the release condition after sending the information about the target free memory page to the VMM, and releases the target free memory page by the VMM, thereby achieving the overcommitment of the memory managed by the virtual machine.

In a possible implementation, in response to the memory release instruction, the usage permission of the memory page of the virtual machine corresponding to the memory release instruction is modified to unavailable.

It is understandable that the usage permission of the memory page of the virtual machine corresponding to the memory release instruction may be modified to unavailable by responding to the memory release instruction, thereby preventing the memory page designated for release by the memory release instruction from being re-occupied by the virtual machine, which may result in a memory release failure.

In a possible implementation, obtaining the information about the memory page of the virtual machine includes: obtaining the information about the memory page of the virtual machine from the virtual machine by invoking a Balloon simulation device.

It is understandable that the Balloon simulation device may be simulated in the server, the information about the memory page of the virtual machine may be obtained by invoking the Balloon simulation device, and with the ballooning memory technology, the process of releasing the memory managed by the virtual machine to the host machine may be achieved based on the information about the memory of the virtual machine.

In a possible implementation, the first information about the memory page of the host machine is stored in Peripheral Component Interconnect PCI configuration space, where the PCI configuration space is configuration space of the Balloon simulation device simulated by the host machine.

It is understandable that the simulated Balloon simulation device may be a PCI device, so the Balloon simulation device is equipped with the PCI configuration space, and the first information about the memory page of the host machine may be stored in the PCI configuration space, enabling the server to obtain and determine the release condition.

In a possible implementation, the method is applied to the virtual machine monitor VMM of the host machine or to the virtual machine VM.

It is understandable that the method may be applied to the virtual machine monitor VMM of the host machine or in the virtual machine VM, which expands the way in which the method is implemented.

In a second aspect, the embodiments of the present application provide a virtual machine memory management apparatus. The virtual machine memory management apparatus is configured to perform any virtual machine memory management method provided in the first aspect.

In a possible implementation, the present application may divide functional modules of the virtual machine memory management apparatus according to the method provided in the first aspect. For example, the functional modules may be divided by function, or two or more functions may be integrated into a single processing module. For example, the present application may divide the virtual machine memory management apparatus into an obtaining module, a processing module, and so on by function. For descriptions of possible technical solutions performed by the functional modules divided above and their beneficial effects, reference may be made to in technical solutions provided in the first aspect or their possible implementations. The details will not be repeated here.

In a third aspect, the embodiments of the present application provide a host machine, and the host machine includes at least one virtual machine, a processor, and a memory. The processor is coupled to the memory, and the memory is configured to store a computer instruction, where the computer instruction is loaded and executed by the processor for enabling the host machine to implement the virtual machine memory management method described in the above aspects.

In a fourth aspect, the embodiments of the present application provide a computer-readable storage medium. The computer-readable storage medium stores at least one computer program instruction, and the computer program instruction is loaded and executed by the processor for implementing the virtual machine memory management method described in the above aspects.

In a fifth aspect, the embodiments of the present application provide a computer program product. The computer program product includes a computer instruction stored in the computer-readable storage medium. The processor of the computing device reads the computer instruction from the computer-readable storage medium and executes the computer instruction to enable the computing device to implement the virtual machine memory management method provided in various optional implementations in the first aspect.

For specific descriptions of the second aspect to the fifth aspect and their various implementations in the present application, reference may be made to the first aspect and its various implementations; and for the beneficial effects of the second aspect to the fifth aspect and their various implementations, reference may be made to the analysis of the beneficial effects in the first aspect and its various implementations. The details will not be repeated here.

These or other aspects of the present application will become clearer and easier to understand in following descriptions.

### BRIEF DESCRIPTION OF DRAWINGS

FIG. 1 is a schematic diagram of a server according to an example embodiment;
FIG. 2 is a schematic diagram of a virtual machine memory release logic structure involved in the embodiment in FIG. 1;
FIG. 3 is a flow chart of a virtual machine memory management method according to an example embodiment;
FIG. 4 is a flow chart of a virtual machine memory management method according to an example embodiment;
FIG. 5 is a flow chart of a Balloon driver loading process involved in the embodiment in FIG. 4;
FIG. 6 is a flow chart of a virtual machine memory release process involved in the embodiment in FIG. 4;
FIG. 7 is a structural diagram of a virtual machine memory management apparatus according to an example embodiment of the present application; and
FIG. 8 is a structural diagram of a server according to an example embodiment of the present application.

### DESCRIPTION OF EMBODIMENTS

To make objectives, technical solutions, and advantages of the present application clearer, the following provides detailed descriptions of embodiments of the present application with reference to accompanying drawings.

In the document, "a plurality of" represents two or more. "and/or" refers to an association relationship between association objects, indicating that three relationships may exist. For example, A and/or B may represent: A exists independently, A and B exist simultaneously, and B exists independently. A character "/" generally indicates that the association objects are in an "or" relationship.

Server virtualization introduces a virtual machine monitor (VMM) between hardware and an operating system, which may abstract, transform, and simulate physical resources (a CPU, memory, disk space, a network adapter, etc.) and combine them into a plurality of virtual machines (VMs) capable of running different operating systems. Virtualization of a single server and running of a plurality of virtual machines on a virtualization platform may allow a large quantity of resources of a physical host to be sliced into a plurality of flexible and controllable virtual machines that are indistinguishable from the physical host, and may even allow for overcommitting of physical host resources (such as CPU and memory overcommitment capabilities) and dynamic allocation and recovery of the resources, thereby greatly increasing a utilization rate of the server and reducing operational and management costs. Although virtualization technologies have enabled slicing and simulation of the physical host resources and fine-grained allocation of the host resources, which improves resource utilization, the reality is that due to a peak and valley phenomena of a service within the virtual machine, there is a circumstance where a memory resource within the virtual machine is occupied but not used, resulting in waste of memory in the virtual machine. In order to solve the problem of the waste of the memory in the virtual machine, a "memory ballooning" technology may be used.

The "memory ballooning" technology may detect memory usage within the virtual machine via a Balloon device simulated by the VMM and a Balloon driver installed inside the virtual machine. The Balloon driver may release free memory of the virtual machine to the host by two methods, and the memory may be utilized by other VMs or applications on the host, thereby improving memory utilization. One method is a Balloon inflate/deflate method, in which the Balloon driver requests the free memory in the virtual machine and notifies a backend by the Balloon device to release the memory requested by the Balloon driver back to the host, thereby returning the free memory of the virtual machine to the host. During this process, all the free memory visible in the virtual machine is utilized. The Balloon driver releases the memory in the virtual machine and returns the memory in the virtual machine by memory virtualization of the VMM. At this point, released memory visible to a memory management unit in the virtual machine returns to content before Balloon inflation.

In the method, the method for releasing the free memory to the host involves the Balloon driver requesting the free memory, and then releasing it to the host. The other method still utilizes the Balloon driver, but with an enhanced capability, called a free page report (free page report, FPR). The FPR may be processed when a memory release operation is conducted in memory management of a virtual machine operating system. When releasing the memory, the virtual machine operating system first isolates the memory and then notifies the backend VMM via the Balloon driver, the VMM releases the memory on the physical machine and then notifies the Balloon driver in the virtual machine, and then the Balloon driver re-releases the isolated memory.

Since the above methods for releasing the memory in the virtual machine do not specify a page size of 4K, 2M, or 64K, and a smallest page unit of a memory page is 4K, by default, the memory may be successfully released only when a page size of the memory page managed by the host machine is the smallest page unit of 4K. Generally, for processing performance considerations, a large page size is selected for the memory page managed by the host machine, for example, 2M. Therefore, the page size of the memory page managed by the virtual machine is unequal to the page size of the memory page managed by the host machine, and when the size of the memory page managed by the virtual machine is less than the size of the memory page managed by the host machine, the memory managed by the virtual machine may not be properly released.

The embodiments of the present application may expand a Balloon device configuration (that is, PCI configuration space) and add a new capability to indicate a page size and page alignment information of the memory page managed by the host machine. Besides, the page is organized and processed on the VM, page statistics is organized by a bitmap (or other organizing methods, for example, a linked list), and when a complete host page is formed, release is carried out according to an existing process; or the page is processed in the VMM, and the VMM organizes the page release by the bitmap (or other organizing methods, for example, the linked list), and when a memory page (group) that meets a release condition is formed, the memory page (group) is released, and a status of an unreleased page is notified to the virtual machine.

The following provides a detailed description of the method provided in the embodiments of the present application with reference to the accompanying drawings in the description.

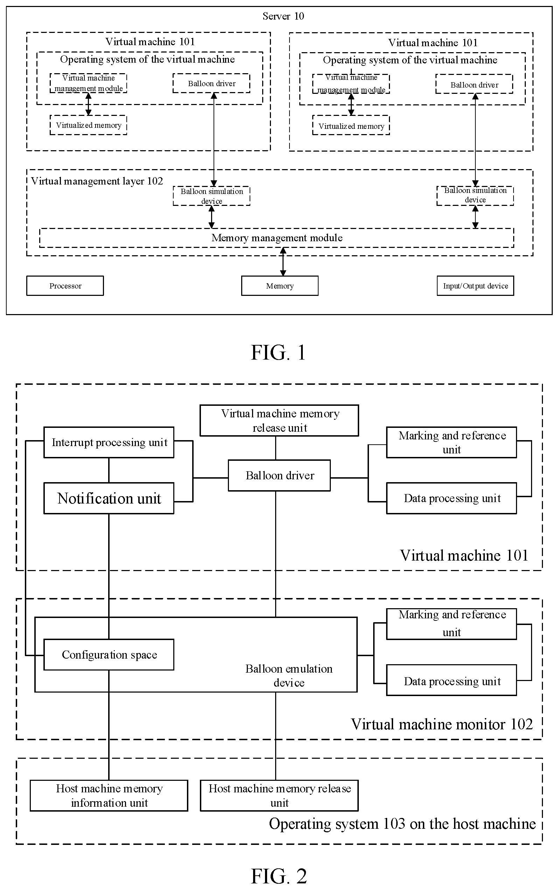

FIG. 1 is a schematic diagram of a server according to an embodiment of the present application. A server 10 includes a plurality of pieces of hardware, a virtual machine monitor 102 (Virtual Machine Monitor, VMM), and at least one virtual machine (Virtual Machine, VM) 101 running on the hardware of the server 10.The host machine of the at least one virtual machine is the server 10, and the hardware of the server 10 includes a processor, memory, and an input/output device. The at least one virtual machine 101 is launched by a VMM 102.

To solve the problem of failing to effectively release the free memory within the VM 101 since the VM 101 is unable to obtain a size of the memory page used by the memory actually managed by the host machine and the alignment information used for memory alignment, thus, in the embodiment of the present application, first information of the memory page of the host machine may be added in original PCI configuration space. The first information of the memory page of the host machine may include the size and the alignment information of the memory page managed by the host machine, where the alignment information may be a starting address and/or an ending address of the memory page. Besides, a memory marking and reference unit is added in the virtual machine to record the release and usage of the memory page in the VM, so that whether a free memory page forms a target free memory page that may be released on the host machine may be determined.

The virtual machine 101 may have an independent operating system (Operating System, OS), where the operating system of the virtual machine may be different from the operating system of the host machine. The operating system of the virtual machine 101 includes a memory management module for managing virtualized memory (or referred to as memory) allocated to the virtual machine 101. To release the virtualized memory to the host machine, the balloon (Balloon) driver may be set up in the operating system of the virtual machine 101. Since usage of the virtualized memory within the operating system of the virtual machine 101 is dynamically changing, the Balloon driver may notify the VMM 102 of details of the released virtualized memory in the virtual machine 101 by the Balloon device corresponding to the Balloon driver in the VMM 102. The Balloon device in the VMM 102 may leverage the memory management module of the host machine's kernel to release the memory freed up in the virtual machine to the memory of the host machine, thereby avoiding a memory resource waste problem where the memory is not used in the VM 101 and may not be used by other applications or the VMM 102 on the host machine.

In a possible implementation, the virtual machine 101 may obtain second information about the memory page of the virtual machine and the first information about the memory page of the corresponding host machine. The host machine corresponding to the virtual machine is a host machine running the virtual machine. The size of the free memory page in the virtual machine and the size of the memory page managed by the host machine are determined, and the virtual machine 101 determines the free memory page that has a same starting and/or ending address, consecutive addresses, and a total memory size equal to the size of the memory page managed by the host machine as the target free memory page, and notifies the VMM of releasing the target free memory page. Alternatively, the VMM may obtain the second information about the memory page of the virtual machine and information about the memory page of the host machine corresponding to the virtual machine, determine the size of the free memory pages in the virtual machine and the memory pages managed by the host machine, determine the free memory page that has the same starting address, the consecutive addresses, and the total memory size equal to the size of the memory page managed by the host machine as the target free memory page, and release the target free memory page.

For instance, the virtual machine 101 and the VMM 102 in FIG. 1 may include a plurality of functional modules that implement the method described in the present application. Taking FIG. 2 for example, FIG. 2 is a schematic diagram of a virtual machine memory release logic structure involved in the embodiment of the present application. As shown in FIG. 2, a Balloon simulation device is set up in the VMM 102, where the Balloon simulation device may be a simulated standard Peripheral Component Interconnect (Peripheral Component Interconnect, PCI) device. Therefore, the Balloon simulation device has internal configuration space, or the VMM 102 has configuration space corresponding to the Balloon simulation device. The Balloon simulation device may be configured to release free memory in the virtual machine 101 to the host. The virtual machine 101 is equipped with a Balloon driver corresponding to the Balloon simulation device, where the Balloon driver is configured to discover and enable the Balloon simulation device. An operating system 103 of the host machine may run on the hardware in the server, for example, the processor.

The Balloon driver may be a standard PCI driver and is equipped with an information notification mechanism, where communication from the VMM 102 to the VM 101 is achieved by an interrupt processing unit, whereas communication from the VM 101 to the VMM 102 is achieved by a notification unit by writing to a Bar space of the configuration space. In addition, the Balloon driver and the Balloon simulation device are also equipped with a data processing mechanism, and a data processing unit is configured to process data.

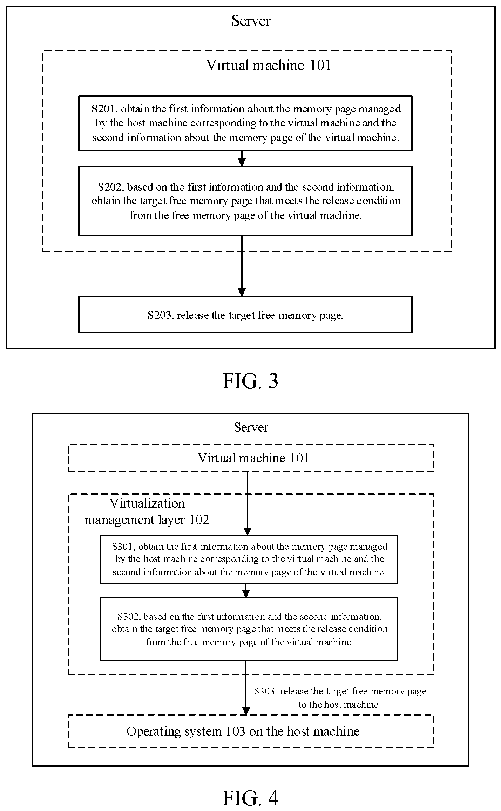

The following describes the method provided in the present application based on architectural diagrams shown in FIG. 1 and FIG. 2. FIG. 3 is a flow chart of a virtual machine memory management method according to an example embodiment of the present application. The virtual machine memory management method is applied to the virtual machine and includes the following steps:
S201, obtain the first information about the memory page managed by the host machine corresponding to the virtual machine and the second information about the memory page of the virtual machine.

In the embodiment of the present application, the first information about the memory page managed by the host machine corresponding to the virtual machine may be configured to indicate the size of the memory page managed by the host machine and the information for page alignment. The second information about the memory page of the virtual machine may indicate the free memory page in the memory page managed by the virtual machine. The virtual machine may obtain the second information of its own memory page from the virtual machine. For example, the second information about the memory page may be stored in a first data structure in a marking and reference unit in FIG. 2, and the virtual machine may obtain the second information about the memory page from the marking and reference unit in FIG. 2.

The first information about the memory page of the host machine may be configured to indicate the size of the memory page managed by the host machine. The virtual machine may obtain the first information about the host machine from the host machine corresponding to the virtual machine. For example, the information about the memory page of the host machine is stored in the PCI configuration space of the VMM, and the virtual machine may obtain the first information about the memory page of the host machine from the PCI configuration space of the VMM.

It should be understood that the free memory page involved in the embodiment of the present application may be a memory page allocated to the virtual machine but not used by a program in the virtual machine, or released to the virtual machine after being used by the program in the virtual machine.

S202, based on the first information and the second information, obtain the target free memory page that meets the release condition from the free memory page of the virtual machine.

In the embodiment of the present application, based on the second information about the memory page of the virtual machine and the obtained first information about the memory page of the corresponding host machine, the virtual machine may obtain the target free memory page that meets the release condition from the free memory page managed by the virtual machine.

The release condition may include: a starting address of the target free memory page in the virtual machine being the same as the starting address of the memory page managed by the host machine, and a total memory size of consecutive free memory pages starting from the starting address of the target free memory page being equal to the size of the memory page managed by the host machine.

For instance, when determining whether the page sizes are equal, the virtual machine may obtain each free memory page in the memory page managed by the virtual machine itself. Based on the obtained page size of the memory page managed by the host machine, the virtual machine may start from a memory address of a first free memory page, based on the memory address, to sequentially search for the size of consecutive free memory pages that is equal to the page size of the memory page managed by the host machine, and take each free memory page that meets the release condition as the target free memory page.

In a possible implementation, the virtual machine may determine whether the size of the memory that consist of the consecutive free memory pages based on the memory address is equal to the page size of the memory page managed by the host machine.

S203, release the target free memory page.

In the embodiment of the present application, after determining the target free memory page, the virtual machine may first notify the VMM, and then the VMM releases the target free memory page to the host machine corresponding to the virtual machine.

For instance, the virtual machine may notify the Balloon simulation device of information about a memory page to be released by writing the information to the PCI configuration space of the Balloon simulation device in the VMM. The information about the memory page to be released may be configured to indicate an address of the memory to be released, that is, the memory address of the target free memory page determined in S202. This allows the VMM to release the free memory page in the virtual machine based on the information about the memory page to be released.

In a possible implementation, the VMM of the host machine may directly release the free memory page in the virtual machine based on the information about the memory page to be released, for example, release the memory by directly invoking a memory interface of the host machine.

In yet another possible implementation, in order to ensure accuracy of the release, after determining the information about the memory page to be released, the VMM of the host machine may re-determine whether the target free memory page meets the release condition, that is, when the size of the memory page with consecutive free bits is equal to the size of the memory page managed by the host machine, determine whether the starting address of the first free memory page in the memory page with consecutive free bits in the virtual machine is the same as the starting address of the memory page managed by the host machine. When the starting address of the first free memory page in the memory page with consecutive free bits in the virtual machine is the same as the starting address of the memory page managed by the host machine, the memory page with consecutive free bits is determined as the target free memory page meeting the release condition. When the release condition is still met, the VMM may release the memory by invoking the memory interface of the host machine.

Based on the method shown in FIG. 3, the second information about the memory page of the virtual machine is obtained for determining the free memory page in a memory page managed by the virtual machine and a starting address of each free memory page, and the first information about the memory page of the host machine corresponding to the virtual machine is obtained for determining the size of the memory page managed by the host machine and the starting address of each memory page. The virtual machine, based on the determined free memory page in the memory page managed by the virtual machine and the size of the memory page of the host machine, takes the obtained free memory page that has the same starting address, the consecutive addresses, and the total memory size equal to the size of the memory page managed by the host machine as the target free memory page, and releases the target free memory page to the host machine. Since the virtual machine may obtain the size of the memory page managed by the host machine, the virtual machine may release a plurality of consecutive memory pages managed by the virtual machine, whose total memory size is equal to the size of the memory page managed by the host machine, to the host machine. This allows the host machine to manage the memory release according to its own memory page size, solving the problem where the memory managed by the virtual machine fails to be released to the host machine due to an inconsistency between the size of the memory page managed by the virtual machine and the size of the memory page managed by the host machine, thereby achieving the overcommitment of the memory managed by the virtual machine.

The method in the present application is introduced in FIG. 3 by taking the VM as an execution entity for example. Alternatively, the method in the present application may further be performed by the VMM. The following introduces the method in the present application by taking the VMM as the execution entity for example.

FIG. 4 is a flow chart of a virtual machine memory management method according to an example embodiment. The virtual machine memory management method is applied to the VMM and includes the following steps:
S301, obtain the first information about the memory page managed by the host machine corresponding to the virtual machine and the second information about the memory page of the virtual machine.

In the embodiment of the present application, the VMM may obtain the first information about the memory page of the host machine, and the first information about the memory page of the host machine may indicate the size of the memory page managed by the host machine and the starting address of each memory page. Moreover, the VMM may obtain the second information about the memory page of the virtual machine from the virtual machine, and the second information about the memory page of the virtual machine may be configured to indicate the size of the free memory page in the memory page managed by the virtual machine and the starting address of each free memory page.

In other words, the second information about the memory page of the virtual machine may be configured to indicate the free memory page in the memory page managed by the virtual machine; and the first information about the memory page of the host machine may be configured to indicate the size and the starting address of the memory page managed by the host machine.

The starting address may be a physical address of a starting position of the memory page.

In a possible implementation, when detecting the free memory page, the virtual machine notifies the VMM of the memory information about the corresponding free memory page. The VMM may track each free memory page sent by the virtual machine.

S302, based on the first information and the second information, obtain the target free memory page that meets the release condition from the free memory page of the virtual machine.

In the embodiment of the present application, based on the first information about the memory page of the host machine and the obtained second information about the memory page of the virtual machine, the VMM may obtain the target free memory page that meets the release condition from the tracked free memory page managed by the virtual machine.

The release condition may include: a starting address of the target free memory page in the virtual machine being the same as the starting address of the memory page managed by the host machine, and a total memory size of consecutive free memory pages starting from the starting address of the target free memory page being equal to the size of the memory page managed by the host machine.

In a possible implementation, whenever the virtual machine detects its own free memory page and sends the second information about the free memory page to the VMM, the VMM may, based on the second information obtained this time and the second information about the free memory page obtained previously, determine whether the target free memory page that meets the release condition exists in each free memory page.

In other words, the VMM may receive the second information about each free memory page in the memory page managed by the virtual machine, sent by the virtual machine, based on the page size and the starting address of the memory page managed by the host machine, search for the size of the memory page with the same starting address and the consecutive address that is equal to the size of the memory page managed by the host machine, and take each free memory page that meets the release condition as the target free memory page.

In a possible implementation, the VMM may, based on the obtained second information of each free memory page, determine the memory address of each free memory page, determine whether the free memory pages are consecutive based on the memory addresses, and determine whether the size of the memory consisting of the consecutive free memory pages is equal to the size of the memory page managed by the host machine.

S303, release the target free memory page to the host machine.

In the embodiment of the present application, after determining the target free memory page, the VMM may release the target free memory page to the host machine corresponding to the virtual machine.

In a possible implementation, after determining the target free memory page, the VMM may send corresponding memory information of the target free memory page to the virtual machine. The virtual machine may determine a memory page to be actually released based on the received memory information corresponding to the target free memory page.

In a possible implementation, after the VMM of the host machine determines the information about the memory page to be released, the VMM may release the memory by directly invoking the memory interface of the host machine.

In addition, the virtual machine memory management method may further be performed by the VMM of the host machine corresponding to the virtual machine interacting with the virtual machine, and the virtual machine memory management method specifically includes the following steps:
S401, the VM obtains the first information about the memory page of the host machine from the VMM.

In the embodiment of the present application, if the free memory page of the VM is tracked on the VM, the first information about the memory page of the host machine needs to be obtained from the VMM after the VM is started.

In a possible implementation, when the VMM prepares to simulate the Balloon simulation device, the VMM may obtain the information about the memory page of the host machine and write the information about the memory page of the host machine to the configuration space of the Balloon simulation device. After the VM is started and loads the Balloon driver, the VM may read the first information about the memory page of the host machine from the configuration space of the Balloon simulation device in the VMM.

The VM may track the free memory page of the VM by means of the first information about the memory page that records the free memory page of the VM in the first data structure.

For example, the first data structure may include any one of a bitmap, a hash table, or a linked list.

In other words, if the first data structure is the bitmap, the VM may create the bitmap according to the first information about the memory page of the host machine after obtaining the first information about the memory page of the host machine. A quantity of bits in the bitmap may be determined by a ratio of the size of the memory page managed by the host machine to the size of the memory page managed by the virtual machine. Each position in the bitmap corresponds to one memory page managed by the virtual machine. A position marked with 1 may indicate that a memory page corresponding to the position is the free memory page, and a position marked with 0 may indicate that a memory page corresponding to the position is a normally used memory page.

In a possible implementation, the first information about the memory page of the host machine includes the page size of the memory page managed by the host machine, and may further include the page alignment information of the memory page managed by the host machine. The page alignment information may indicate a memory address starting position of each memory page managed by the host machine, which is configured to determine a corresponding position of each free memory page in the bitmap.

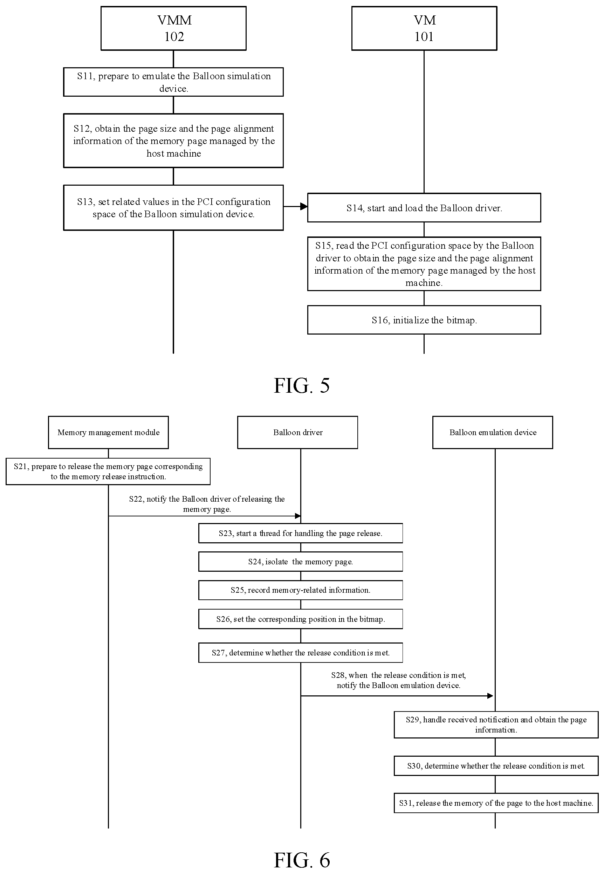

For instance, FIG. 5 is a flow chart of a Balloon driver loading process involved in the embodiment of the present application. As shown in FIG. 5, the Balloon simulation device is simulated in the VMM (S11); the VMM obtains the page size and the page alignment information of the memory page managed by the host machine (S12); obtained values of the page size and the page alignment information of the memory page managed by the host machine are set in the PCI configuration space of the Balloon simulation device (S13); on the other side, when the virtual machine is started and loads the Balloon driver (S14), the virtual machine may read the PCI configuration space by the Balloon driver to obtain the page size and the page alignment information of the memory page managed by the host machine, and according to the obtained page size and the obtained page alignment information of the memory page managed by the host machine (S15); initialize the bitmap (S16).

When the VMM simulates the Balloon simulation device, the information about the memory page of the host machine may be set in the PCI configuration space by adding fields. After the VM is started, the Balloon driver in the virtual machine may identify and obtain the added fields to read the information about the memory page of the host machine.

S402, the VM receives a memory release instruction.

In the embodiment of the present application, the memory management module in the virtual machine may receive a memory release instruction, where the memory release instruction is configured to instruct the release of the free memory page of the virtual machine.

In a possible implementation, when releasing the memory, application software may send the memory release instruction to the virtual machine, and the memory management module in the virtual machine may receive the memory release instruction.

When each memory page managed by the virtual machine needs to be released, the memory management module may obtain one memory release instruction configured to instruct the release of the memory page.

In another possible implementation, when the free memory page managed by the virtual machine is tracked on the VMM, the VMM may receive the memory release instruction from the virtual machine, where the memory release instruction may include information about the free memory page.

S403, in response to the memory release instruction, the VM obtains the second information about the memory page.

In the embodiment of the present application, when the free memory page managed by the virtual machine is tracked on the VM, the VM may obtain the free memory page managed by the virtual machine according to the memory release instruction.

The first information about the memory page of the host machine is stored in Peripheral Component Interconnect PCI configuration space, where the PCI configuration space is configuration space of the Balloon simulation device simulated by the host machine and may be set in the Balloon simulation device or in the VMM.

In a possible implementation, the second information about the memory page of the virtual machine may include each memory page managed by the virtual machine and the marking information of each memory page. The marking information of the memory page is configured to indicate whether the memory page is the free memory page. The marking information of the memory page in a free state may be the free bits.

Specifically, according to the memory release instruction, the VM may obtain the free memory page indicated by the memory release instruction. The VM may record each memory page managed by the virtual machine. Each time a memory release instruction is received, the VM may add marking information to the corresponding memory page, marking the memory page indicated by the memory release instruction as the free memory page. Additionally, each time a free memory page record is added, the VM may check whether the currently recorded free memory page meets the release condition.

In a possible implementation, when the marking information about the memory page managed by the virtual machine indicates that the memory page is free, a usage permission of the memory page managed by the virtual machine is modified to be unavailable for the virtual machine.

In other words, after receiving the memory release instruction, the VM may isolate a memory page corresponding to the memory release instruction, preventing the memory page from being applied again during processing.

For instance, if the VM records the memory page managed by the virtual machine in the first data structure, and the first data structure is implemented as the bitmap, the position in the bitmap corresponding to the memory page indicated by the memory release instruction may be marked with 1.

In a possible implementation, the VMM may obtain the second information about the memory page of the virtual machine from the virtual machine by invoking the Balloon simulation device.

In other words, if the VMM tracks the free memory page managed by the virtual machine, the VMM may obtain the second information about the memory page of the virtual machine from the virtual machine by invoking the Balloon simulation device.

S404, based on the first information and the second information, the VM obtains the target free memory page that meets the release condition from the free memory page.

In the embodiment of the present application, the VM takes the obtained free memory pages that have the same starting address, the consecutive addresses, and the total memory size equal to the size of the memory page managed by the host machine as the target free memory page.

In a possible implementation, the VM acquires a first quantity, where the first quantity is a ratio of the size of the memory page managed by the host machine to a size of the memory page managed by the virtual machine. If the marking information of each of the first quantity of consecutive memory pages in the first data structure indicates that the memory page is the free memory page, the first quantity of consecutive memory pages are determined as the target free memory page.

In other words, if the size of the memory page managed by the host machine is 64K, and the size of the memory page managed by the virtual machine is 4K, the release condition may be 16 consecutive free memory pages managed by the virtual machine, and the 16 consecutive free memory pages may be determined as the target free memory page.

For instance, if the VM records the memory page managed by the virtual machine in the first data structure, and the first data structure is implemented as the bitmap, a position in the bitmap corresponding to the memory page indicated by the memory release instruction may be marked with 1. If the size of the memory page managed by the host machine is 64K, and the size of the memory page managed by the virtual machine is 4K, the virtual machine may check whether there are 16 consecutive positions marked with 1 in the bitmap. If so, the virtual machine determines whether a starting address of a first memory page is same as a starting address of each memory page managed by the host machine. If the memory page with the same starting address exists, the free memory page corresponding to each position may be determined as the target free memory page; alternatively, if the 16 consecutive positions marked with 1 exist, the virtual machine may determine whether an ending address of a last memory page is same as an ending address of each memory page managed by the host machine. If the memory page with a same ending address exists, the free memory page corresponding to each position may be determined as the target free memory page.

S405, the VM releases the target free memory page to the host machine.

In the embodiment of the present application, after determining the target free memory page, the VM may release the target free memory page to the host machine corresponding to the virtual machine.

In a possible implementation, after determining the target free memory page, the VM may send the information about the target free memory page to the VMM of the host machine. After determining the information about the memory page to be released, the VMM may release the memory by directly invoking the memory interface of the host machine.

For instance, FIG. 6 is a flow chart of a virtual machine memory release process involved in the embodiments of the present application. As shown in FIG. 6, after receiving the memory release instruction, the memory management module in the VM controls the VM to prepare to release the memory page corresponding to the memory release instruction (S21). The memory management module may notify the Balloon driver of releasing the memory page (S22). The Balloon driver starts a thread for handling the page release (S23). Within the thread for handling the page release, after the notification of releasing the memory page is received, the memory page may be isolated (S24), and memory-related information about the memory page such as the memory address of the memory page is recorded (S25). Based on the memory-related information about the memory page, a corresponding position in the bitmap may be determined and marked with 1 (S26). The VM determines whether there is a memory page that meets the release condition, has consecutive positions in the bitmap and has a memory page size equal to the size of the memory page managed by the host machine (S27). If there is the target free memory page, the Balloon driver may notify the Balloon simulation device in the VMM (S28). The method for notifying the Balloon simulation device in the VMM may be that the information about the target free memory page is written to the PCI configuration space of the Balloon simulation device by the Balloon driver, and the Balloon simulation device obtains memory page information about the target free memory page obtained from its own memory space (S29). The VMM may re-determine whether the target free memory page meets the release condition based on the memory address (including the ending address and/or the starting address) of the target free memory page and the page size of the memory page of the host machine, that is, determine whether the memory size of the target free memory page is same as the page size of the memory page of the host machine, and/or, the starting address of the target free memory page is same as the starting position of the memory page of the host machine (S30). If the release condition is met, the target free memory page may be released to physical memory of the host machine (S31). The memory page released to the host machine may be applied for use by other virtual machines or application software.

The embodiment of the present application may support on-demand application and release of the virtualized memory when different page tables are used by the host, which achieves all-round support for a memory overcommitment feature in a virtualization scenario and increases a density of the virtual machine on a single host, thereby improving the memory utilization and reducing costs.

The solution provided in the embodiment of the present application is described above from the perspective of methodology. Understandably, to implement the above functions, a virtual machine memory management apparatus includes at least one of a corresponding hardware structure or a software module for executing various functions. It should be readily apparent to those skilled in the art that the units and algorithm steps of various examples described in embodiments disclosed herein may be implemented by hardware, or a combination of hardware and computer software. Whether a particular function is executed by hardware or software driving the hardware depends on a specific application and design constraints of the technical solution. Those skilled in the art may use different methods for each specific application to implement the described functions, but such an implementation should not be considered beyond the scope of the present application.

In the embodiment of the present application, functional units of the virtual machine memory management apparatus may be divided according to the above method examples. For example, the functional units may be divided according to functions, or two or more functions may be integrated into a single processing unit. The integrated units mentioned above may be implemented either in a form of hardware or software functional units. It should be noted that division of units in the embodiment of the present application is illustrative and represents only a logical function division. Other division methods may be used in actual implementation.

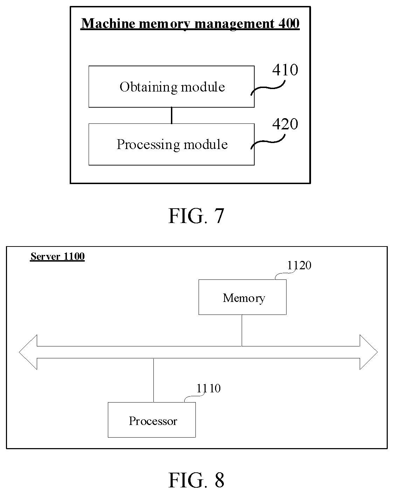

For instance, FIG. 7 is a structural diagram of the virtual machine memory management apparatus 400 according to an example embodiment of the present application. The virtual machine memory management apparatus 400 may be in the server, and the virtual machine memory management apparatus 400 includes an obtaining module 410 and a processing module 420.

The obtaining module 410, is configured to obtain the first information about the memory page managed by the host machine corresponding to the virtual machine, where the first information includes the size of the memory page managed by the host machine and the starting address of the memory page managed by the host machine;
The obtaining module 410, is further configured to obtain the second information about the memory page of the virtual machine, where the second information includes state information of the memory page of the virtual machine and the starting address of the memory page managed by the virtual machine;
The processing module 420, is configured to, based on the first information and the second information, determine the target free memory page from the free memory page of the virtual machine, where the free memory page is a memory page whose state information is free, and the target free memory page of the virtual machine is a free memory page that meets the release condition, where the release condition includes: the starting address of the target free memory page in the virtual machine being the same as the starting address of the memory page managed by the host machine, and the total memory size of the consecutive free memory pages starting from the starting address of the target free memory page being equal to the page size of the memory page managed by the host machine.

The processing module 420 is further configured to release the target free memory page.

For example, as shown in FIG. 3, the obtaining module 410 may be configured to perform S201 shown in FIG. 3, and the processing module 420 may be configured to perform S202 and S203 shown in FIG. 3.

In a possible implementation, the obtaining module 410 includes an obtaining submodule.

An obtaining submodule, is configured to obtain the first information about the memory page managed by the host machine in the configuration space of the virtual machine monitor VMM.

In a possible implementation, the apparatus further includes an instruction receiving module and a state setting module.

The instruction receiving module, is configured to obtain a memory release instruction of the virtual machine, where the memory release instruction is configured to instruct the release of the memory page in the virtual machine;
The state setting module, is configured to respond to the memory release instruction to set the state information of the memory page of the virtual machine corresponding to the memory release instruction to the free state.

In a possible implementation, the processing module 420 is configured to, in response to the memory release instruction, determine whether the size of the memory page with the consecutive free bits in the virtual machine is equal to the size of the memory page managed by the host machine;
When the size of the memory page with the consecutive free bits in the virtual machine is equal to the size of the memory page managed by the host machine, whether the starting address of the first free memory page in the memory page with the consecutive free bits in the virtual machine is the same as the starting address of the memory page managed by the host machine is determined;
When the starting address of the first free memory page in the memory page with the consecutive free bits in the virtual machine is the same as the starting address of the memory page managed by the host machine, the memory page with the consecutive free bits is determined as the target free memory page that meets the release condition.

In a possible implementation, determining whether the size of memory pages with the consecutive free bits in the virtual machine is equal to the size of the memory page managed by the host machine includes:
Determining whether a quantity of memory pages with the consecutive free bits in the virtual machine is the same as a quantity of a first free memory page, where the quantity of the first free memory page is a ratio of the size of the memory page managed by the host machine to the size of the memory page managed by the virtual machine;
When the quantity of the memory pages with the consecutive free bits in the virtual machine is the same as the quantity of the first free memory page, determining that the size of the memory page with consecutive free bits in the virtual machine is equal to the size of the memory page managed by the host machine.

In a possible implementation, the state information of the memory page of the virtual machine is stored in the first data structure, where the first data structure includes any one of the bitmap, the hash table, or the linked list.

In a possible implementation, the first data structure is the bitmap.

The processing module 420 includes a target determining submodule.

The target determining submodule, is configured to, when a quantity of consecutive memory pages in the bitmap is the same as the quantity of the first free memory page, determine that the consecutive memory pages are the target free memory page, where the quantity of the first free memory page is the ratio of the size of the memory page managed by the host machine to the size of the memory page managed by the virtual machine.

In a possible implementation, the apparatus further includes an information transmission module and a judgment module.

The information transmission module, is configured to send the information about the target free memory page to the virtual machine monitor VMM;
The judgment module, is configured to invoke the virtual machine monitor VMM to determine whether the target free memory page meets the release condition;
The processing module 420 includes a release submodule.

The release submodule, is configured to, if the target free memory page meets the release condition, release the target free memory page.

In a possible implementation, the apparatus further includes a permission modification module.

The permission modification module, is configured to, in response to the memory release instruction, modify the usage permission of the memory page of the virtual machine corresponding to the memory release instruction to be unavailable.

For detailed description of the above optional methods, reference may be made to the above method embodiments, which will not be repeated here. In addition, for the above explanations of any one virtual machine memory management apparatus and description of beneficial effects, reference may be made to the above corresponding method embodiments, which will not be repeated here.

For example, as shown in FIG. 1, some or all of functions implemented by the obtaining module 410 and the processing module 420 in the virtual machine memory management apparatus may be executed by the VM 101 or the VMM 102 in FIG. 1.

FIG. 8 is a structural diagram of a server according to an example embodiment of the present application. The server 1100 in the present application may include one or more of the following components: a processor 1110 and a memory 1120.

The processor 1110 may include one or more processing cores. The processor 1110 connects all parts in a terminal by various interfaces and circuits, and executes various functions and processes data of the terminal by running or executing an instruction, a program, a code set, or an instruction set stored in the memory 1120 and invoking data stored in the memory 1120. Optionally, the processor 1110 may be implemented in at least one of following hardware forms: digital signal processing (digital signal processing, DSP), field-programmable gate array (field-programmable gate array, FPGA), or programmable logic array (programmable logic array, PLA). The processor 1110 may integrate one or a combination of a central processing unit (Central Processing Unit, CPU), a graphics processing unit (graphics processing unit, GPU), and a modem. The CPU primarily handles an OS, a user interface, and an application. The modem is used for wireless communication. Understandably, the modem may also be implemented separately by a communication chip without being integrated into the processor 1110.

The memory 1120 may include random-access memory (random access memory, RAM), and/or read-only memory (read-only memory, ROM). Optionally, the memory 1120 includes a non-transitory computer-readable storage medium (non-transitory computer-readable storage medium). The memory 1120 may be configured to store the instruction, the program, the code, the code set, or the instruction set. The memory 1120 may include a program storage area and a data storage area, where the program storage area may store an instruction for implementing the operating system, an instruction for implementing at least one function, an instruction for implementing the above method embodiments, etc. The operating system may be a Linux operating system, an Open Euler open-source operating system, a CentOS open-source operating system, etc.

In addition, those skilled in the art may understand that the structure of the server 1100 shown in the above figures does not constitute a limitation on the server 1100. The server 1100 may include more or fewer components than shown in the figures, combine certain components, or have a different arrangement of components.

The embodiment of the present application further provides a computer-readable storage medium, where the computer-readable storage medium stores at least one computer instruction. The at least one computer instruction is loaded and executed by the processor to implement the virtual machine memory management methods described in the previous embodiments. For an explanation of relevant content in and a description of a beneficial effect of any of the computer-readable storage media provided above, reference may be made to the corresponding embodiments. The details will not be repeated here.

The embodiment of the present application further provides a chip. The chip integrates a control circuit and one or more ports for implementing functions of the above virtual machine memory management apparatus. Optionally, for the functions supported by the chip, references may be made to the above descriptions. The details will not be repeated here. Those skilled in the art may understand that all or part of the steps in the above embodiments may be accomplished by a program directing relevant hardware. The program may be stored in the computer-readable storage medium. The storage medium may be random-access memory, read-only memory, etc. The processing unit or processor may be a central processing unit, a general-purpose processor, an application-specific integrated circuit (application specific integrated circuit, ASIC), a digital signal processor (digital signal processor, DSP), a field-programmable gate array (field programmable gate array, FPGA), or other programmable logic devices, transistor logic devices, hardware components, or any combination of them.

The embodiment of the present application further provides a computer program product including an instruction. When running on a computer, the instruction enables the computer to perform any method in the above embodiments. The computer program product includes one or a plurality of computer instructions. When the computer program instruction is loaded and executed on the computer, processes or functions in the embodiment of the present application are generated in whole or in part. The computer may be a general-purpose computer, a special-purpose computer, a computer network, or other programmable device. The computer instruction may be stored in a computer-readable storage medium or transmitted from one computer-readable storage medium to another computer-readable storage medium. For example, the computer instruction may be transmitted from a website, computer, server, or data center to another website, computer, server, or data center by wired means (such as a coaxial line, an optical fiber, or a digital subscriber line [digital subscriber line, DSL]), or by wireless means (such as infrared, radio, microwave, etc.). The computer-readable storage medium may be any available medium accessible to the computer, or a data storage device integrating one or a plurality of available media, such as a server or a data center. The available medium may be a magnetic medium (such as a floppy drive, a drive, or a tape), an optical medium (such as a digital video disc [DVD]), or a semiconductor medium (such as a solid state drive [SSD]).

It should be noted that the components provided in the embodiment of the present application for storing the computer instruction or the computer program, such as, but not limited to, the memory, the computer-readable storage medium, and the communication chip, are all non-transitory. Those skilled in the art should appreciate that, in one or a plurality of the examples described above, the functions described in the embodiments of the present application may be implemented by the hardware, the software, firmware, or any combination of them. When implemented by software, these functions may be stored in the computer-readable storage medium or transmitted as one or more instructions or the code on the computer-readable storage medium. The computer-readable storage medium includes a computer storage medium and a communication medium, where the communication medium includes any medium that facilitates transmission of the computer program from one place to another. The storage medium may be any available medium accessible via a general-purpose or special-purpose computer.

The above are merely optional embodiments of the present application, and are not intended to construe a limitation of the present application. Any modification, equivalent substitution, or improvement made within the spirit and principles of the present application should be covered within the scope of protection of the present application.

## Claims

1. A virtual machine memory management method, comprising:
obtaining first information about a memory page managed by a host machine corresponding to a virtual machine, wherein the first information comprises a size and a starting address of the memory page managed by the host machine;
obtaining second information about a memory page of the virtual machine, wherein the second information comprises state information of the memory page of the virtual machine and a starting address of the memory page managed by the virtual machine;
based on the first information and the second information, determining a target free memory page that meets a release condition from a free memory page of the virtual machine;
wherein the release condition comprises: a starting address of the target free memory page in the virtual machine being same as the starting address of the memory page managed by the host machine, and a total memory size of consecutive free memory pages starting from the starting address of the target free memory page being equal to the size of the memory page managed by the host machine; and
releasing the target free memory page.

2. The method according to claim 1, wherein obtaining the first information about the memory page managed by the host machine corresponding to the virtual machine comprises:
obtaining the first information about the memory page managed by the host machine in configuration space of a virtual machine monitor VMM.

3. The method according to claim 1 or 2, wherein before obtaining the second information of the memory page of the virtual machine, the method further comprises:
obtaining a memory release instruction of the virtual machine, wherein the memory release instruction is configured to indicate release of the memory page of the virtual machine; and
in response to the memory release instruction, setting state information of the memory page of the virtual machine corresponding to the memory release instruction to a free state.

4. The method according to claim 3, wherein based on the first information and the second information, determining the target free memory page that meets the release condition from the free memory page of the virtual machine, comprises:
in response to the memory release instruction, determining whether a size of a memory page with consecutive free bits in the virtual machine is equal to the size of the memory page managed by the host machine;
when the size of the memory page with the consecutive free bits in the virtual machine is equal to the size of the memory page managed by the host machine, determining whether a starting address of a first free memory page in the memory page with the consecutive free bits in the virtual machine is the same as the starting address of the memory page managed by the host machine;
when the starting address of the first free memory page in the memory page with the consecutive free bits in the virtual machine is the same as the starting address of the memory page managed by the host machine, determining that the memory page with the consecutive free bits is the target free memory page that meets the release condition.

5. The method according to any one of claims 1 to 4, wherein determining whether a size of a memory page with consecutive free bits in the virtual machine is equal to the size of the memory page managed by the host machine, comprises:
determining whether a quantity of memory pages with the consecutive free bits in the virtual machine is the same as a quantity of a first free memory page, wherein the quantity of the first free memory pages is a ratio of the size of the memory page managed by the host machine to a size of the memory page managed by the virtual machine; and
when the quantity of the memory pages with the consecutive free bits in the virtual machine is the same as the quantity of the first free memory page, determining that the size of the memory page with the consecutive free bits in the virtual machine is equal to the size of the memory page managed by the host machine.

6. The method according to any one of claims 1 to 5, wherein the state information of the memory page of the virtual machine is stored in a first data structure, wherein the first data structure comprises any one of a bitmap, a hash table, or a linked list.

7. The method according to claim 6, wherein the first data structure is a bitmap; and
based on the first information and the second information, determining the target free memory page that meets the release condition from the free memory page of the virtual machine, comprises:
when a quantity of consecutive memory pages in the bitmap is the same as a quantity of the first free memory page, determining that the consecutive memory pages are the target free memory page, wherein the quantity of the first free memory page is a ratio of the size of the memory page managed by the host machine to a size of the memory page managed by the virtual machine.

8. The method according to any one of claims 1 to 7, wherein after based on the first information and the second information, determining the target free memory page that meets the release condition from the free memory page of the virtual machine, the method further comprises:
sending information about the target free memory page to a virtual machine monitor VMM; and
determining whether the target free memory page meets the release condition by invoking the virtual machine monitor VMM;
wherein releasing the target free memory page comprises:
when the target free memory page meets the release condition, releasing the target free memory page.

9. The method according to any one of claims 3 to 8, further comprising:
in response to the memory release instruction, modifying a usage permission of the memory page of the virtual machine corresponding to the memory release instruction to be unavailable.

10. A computing device, comprising a processor and a memory; wherein the processor is coupled with the memory; the memory is configured to store a computer instruction; and the computer instruction is loaded and executed by the processor, thereby enabling the computing device to implement the virtual machine memory management method according to any one of claims 1 to 9.
